# EUROPEAN PATENT APPLICATION

(11) **EP 3 604 259 A1**
(43) Date of publication of application: **05.02.2020**
(21) Application number: 18187382.9
(22) Date of filing: 03.08.2018
(51) Int. Cl.: C05G 3/00, C05G 3/02, A01N 25/02, A01N 43/12, A01N 45/00, A01N 43/38, A01N 43/90, A01N 43/653, A01P 21/00

(54) **MICRONUTRIENT CONCENTRATE AND USE THEREOF**

(71) Applicant: Fine Agrochemicals Limited, Worcester WR5 2RQ (GB)
(72) Inventor: WIKELEY, Philip Simon, MALVERN, Worcestershire WR14 1PG (GB); CLAPPERTON, Richard, Southampton, Surrey SO322NS (GB); ALVES, Marissa, Wallington, Surrey SM68PU (GB)
(74) Representative: Hoyng Rokh Monegier LLP

(57) **Abstract**

The invention relates to a liquid, substantially anhydrous concentrate comprising at least 0.1 wt% of metal ions, 0.3 wt% carboxylic acid compound which is soluble in glycol, and at least 40 wt% of a glycol compound. The metal ion preferably is chosen from zinc, manganese, selenium, iron, copper, molybdenum, and magnesium and mixtures of these. The concentrate may contain metal ions in an amount of between 0.3-5 wt%, preferably 0.4-3 wt%.

## Description

### Field of the invention

The invention relates to a micronutrient concentrate for agriculture. Furthermore, invention relates to a micronutrient concentrate with further actives for agriculture. Also, the invention relates to use of said micronutrient concentrate in crops, preferably vegetable, fruit and broad acre crops like cereal crops.

### Background of the invention

In many horticultural and agricultural applications, micronutrients are used to assist growth of plants. Such micronutrients are zinc, manganese, copper, iron, magnesium and molybdenum, of which zinc, copper and manganese are most commonly supplied.

Micronutrients are for example supplied with seeding of crop, to allow a good start of the growth. Such starter formulations generally preferably also comprise plant growth regulators to induce germination.

Micronutrients are available for example as metal-EDTA salts or metal-glycine salts, which salts can be spread over soil as powder.

Micronutrients can also be supplied in water, applied in furrow (together with seeding), as foliar spray, seed treatment or fertigation. Micronutrients as a liquid concentrate that can be easily and reliably mixed with water, generally are water based because metal chelates are very soluble in water.

Micronutrients in foliar spray, fertigation or applied in furrow with seeding are often applied in combination with plant growth regulators (PGRs) or other active compounds.

Plant growth regulators are generally considered to comprise plant hormones, chemical compounds that act like plant hormones, and chemical compounds that inhibit the effect of plant hormones (or inhibit the natural production of plant hormones in a plant and in this way reduce the effect of plant hormones).

The applications of PGRs can be useful to increase the speed of growth, increase root formation, seedling setting and the like. It may also be useful to reduce growth in order to have short stems in grain culturing, reduce seed formation in citrus fruits and the like.

Generally, the farmer appreciates liquid concentrated formulations that can easily be admixed with water to result in homogeneous mixtures without additional process steps.

However, many plant growth regulators are not stable in water. Also, plant growth regulators can be oxidative sensitive, which sensitivity often is enhanced by metal ions.

A farmer prefers to apply several active compounds in one spray run, for example combining the micronutrients with PGRs, with insecticides, acaricides, fungicides, herbicides and the like, and/or wants to combine the micronutrients with additives that allow better uptake in the plant, pH control or other attributes. These other active compounds are preferably also supplied as concentrated liquids.

In practice, the concentrate needs to be storage stable for at least two years. In a first year the concentrate may be bought by a farmer, but in the end it may not be necessary to use the product at all, or only in part. Hence, a farmer requires that the concentrate can be used easily the next year as well.

As explained, concentrates of micronutrients generally are supplied in water, as most metals can be provided as stable, water soluble salts. However, combination of such concentrates with PGRs or other actives may be hampered by hydrolytic and oxidative instability. Also, a number of active substances are sparingly soluble in water.

The present inventors were interested to develop useful liquid concentrates of micronutrients with high stability, that can be combined with plant growth regulators or other active compounds with fungicidal, insecticidal or other activity, and/or appropriate additives, while the concentrate still shows acceptable stability.

### Summary of the invention

It is an object of the invention to provide a micronutrient liquid concentrate without the disadvantages of concentrates according to the prior art, furthermore allowing concentrates with at least one further active or additive stably dissolved in the concentrate.

Furthermore, it is an object of the invention to provide methods of using said micronutrient concentrate to treat seeds or plants.

The object of the invention is achieved by providing a liquid concentrate comprising (i) micronutrients in an amount of at least 0.1 wt% of metal ions, (ii) at least 0.3 wt% of a carboxylic acid compound and (iii) at least 40 wt% of a glycol compound.

The object of the invention is furthermore achieved by providing a liquid concentrate comprising (i) micronutrients in an amount of at least 0.1 wt% of metal ions, (ii) at least 0.3 wt% of a carboxylic acid compound (iii) at least 40 wt% of a glycol compound, and (iv) at least one of a plant growth regulator, fungicide, acaricide, insecticide, herbicide, plant strengthening agent or other additive, preferably at least one plant growth regulator.

The concentrate according the invention is suitable to be diluted in water, in order to be able to spray the active compound on plants or seeds. Hence, the present invention also relates to a water based spraying liquid, wherein the liquid comprises water and a suitable amount of the concentrate described in the preceding paragraphs.

The concentrate according to the present invention allows one or more plant growth regulators to be stably present, while dissolved in the glycol.

The concentrate according to the invention furthermore allows several metal ions to be present in relative high concentrations. It was unexpected, that the glycol compound seems to be instrumental in a coordination with metal ions. For example, 1,3-diols or 1,4-diols were unable to dissolve the metal-EDTA salts, or other metal salts, in substantial amounts. The concentrate according to the invention allows the preparation of water free concentrates because of the 1,2-diol, or etherified derivatives thereof, being used as a solvent.

### Detailed description of the invention

Micronutrients are metal compounds, such as for example salts of zinc, manganese, selenium, iron, copper, cobalt, molybdenum, and magnesium and mixtures of these.

Preferred micronutrients are zinc, manganese and copper, more preferably a combination of these.

These micronutrients may be present in a required amount.

In case a combination of zinc, manganese and copper is used, generally more zinc is used, and less copper. Preferred ranges are 2-6 times more zinc than the amount of copper, and 1-3 times more manganese than the amount of copper. For example a preferred ratio of zinc, manganese and copper can be about 4:2:1.

Generally, the micronutrients are present in an amount of 0.1 wt% or more. It is preferred to have amounts of micronutrients of more than 0.3 wt%, more preferably 0.5 wt% or more (calculated as metal ions on total composition). Generally, it will be difficult to dissolve more than 5 wt% metals in the glycol compound, and an amount of about 4 wt% or less is preferred. Hence, preferred ranges include 0.3-3 wt% and 0.4-2 wt%.

The metal ions can be dissolved in the glycol compound as salts, like sulfates, chlorides but preferably are salts of carboxylic acids, such as for example EDTA, DTPA, amino acid or other salts with organic carboxylic acid comprising compounds like lactic acid or citric acid. As explained above, it was unexpected that 1,2 diols are able to dissolve such metal salts without any water present. The inventors think, that this may be caused by coordination reactions of the metal ion.

Alternatively, the metal ion-carboxylic acid chelates may be formed in situ, like for example by reacting metal ion sulfates, chlorides, oxides, hydroxides or carbonates, with carboxylic acid group comprising compounds.

The salts may comprise crystal water, as some water generally is not detrimental to stability unless further active compounds are very water sensitive. The water molecules may be part of the formed complexes, and may not be freely available for hydrolysis reactions.

Preferably, the metal ions are used as chelates or salts, like for example EDTA, DTPA, citrate salts, proteinates or otherwise in a form that the metals are absorbed by the plant leafs.

The carboxylic acid group of the carboxylic acid compound is able to coordinate with the metal ion, and can be a compound with multiple groups that are able to chelate with the metal ion. Next to one or more carboxylic acid groups, the compound may comprise amine and/or alcohol groups. The molecular weight generally will be about 500 or lower. The carboxylic acid compound generally is an alkane or alkene comprising next to one or more carboxylic acid groups optionally alcohol and/or amine groups.

Suitable examples include EDTA, DTPA, N-(hydroxyethyl)ethylene-diamine-triacetic acid (HEEDT A): also known as EDTA-OH, an amino acid like glycine ot L-proline, or other salts with organic carboxylic acid comprising compounds like lactic acid or citric acid.

The amount of carboxylic acid groups generally is between 0.5 - 20 mole per mole of metal ion. Preferably, the amount is between 1 - 10, more preferably between about 2-5. The metal ions may be 2+ or 3+, and require 2-3 acid groups to be neutralized. Often, with EDTA or DTPA, additional counter ions are present like sodium, ammonium, or potassium. Some excess is not detrimental, but may add to the costs. Other counter ions for the metal ions may be present, like sulfate, chloride, nitrate, hydroxide, carbonate or the like.

As amino acid, naturally occurring (L-)amino acids are preferred, or naturally occurring derivatives thereof. Preferred amino acids include glycine, glycine-betaine alanine, arginine, glutamine, histidine, proline or mixtures thereof. Glycine, glycine-betaine and L-proline are most preferred. Alternatively, mixtures can be used, comprising for example hydrolised proteins, comprising a substantial number of different amino acids.

The amount of compound comprising a carboxylic acid group is more than 0.3 wt%, generally about 1 wt% or more, and more preferably about 3 wt% or more. The amount generally will be about 20 wt% or less, preferably about 10 wt% or less.

The glycol compound preferably is a compound comprising a α,ω-ethyldiolgroup , optionally comprising ethyl-ether groups, and having a molecular weight of about 300 or lower, preferably about 150 or lower. Suitable examples include ethylene glycol, 1,2-propyleneglycol, 1,2-butylene glycol, glycerol, 1,4-diethyletherdiol or polyethyleneglycol with an Mw of about 300 or lower or mixtures thereof.

The more preferred glycol compounds are ethyleneglycol, 1,2-propyleneglycol or glycerol and mixtures of these. Propyleneglycol is most preferred, and may be used in admixture with ethyleneglycol or glycerol.

The amount of glycol compound will be more than 40 wt%, and preferably is about 60 wt% or more. The amount is dependent on the dissolved components.

Preferably, the glycol compound is the substantially sole diluent. Substantially sole means that less than 10 wt% of another organic solvent is present, like ethanol, isopropanol, DMSO, DMF or the like. Preferably, the amount of additional solvents is about 5 wt% or less.

The composition is low or very low in water content, and may be substantially water free, allowing improved stability of water sensitive active agents. The amount of water generally is about 10 wt% or less, preferably about 5 wt% or less, preferably about 1 wt% or less, and more preferably about 0.1 wt% or less. Some water may be advantageous to be able to increase the dissolution speed of metal salts, or to dissolve more metal ions in the glycol, and a skilled person can easily perform some stability tests to determine what amount of water - if any - may be acceptable.

Preferably, the concentrate according the invention may further include an anti-oxidant, such as for example vitamin-E, butylated hydroxyanisole, 2,6-di-tert.-butyl-p-cresol, tert-butylhydroquinone, propyl gallate or butylhydroxytoluene.

The concentrate according to the present invention may further comprise plant growth regulators (PGRs). Preferred PGRs include one or more of chosen from a gibberellin, cytokinin, indole-3-butyric acid, chlormequat, ethephon, S-Abscisic acid (S-ABA), triazoles with growth regulation activity like metconazole and tebuconazole and the like, or an auxin.

Preferably, the concentrate comprises at least two plant growth regulators.

The concentrate preferably comprises as PGR at least gibberellic-acid (GA3), kinetin and indole-3-butyric acid, and preferably a mixture of these three PGRs.

Many PGRs are soluble in glycols, hence a solution can be provided. However, the PGRs are most sensitive for instability when in solution, and it was expected that many of the PGRs that are oxidatively instable, and/or unstable in the presence of water, would not be stable in the concentrate with metal ions and some water.

Unexpectedly, the PGRs - even if unstable with water and/or metal ions - appeared stable in the micronutrient concentrate according the invention.

Suitable gibberellins include gibberellic acid (GA₃), GA₄, GA₇ and others. More generally, the term "gibberellins" encompasses diterpenoids having a tetracyclic ring system. In terms of their nomenclature, gibberellins were numbered in order of their discovery, so the numbering does not signify the position of one particular substituent. The compounds have nineteen or twenty carbons, and four or five ring systems. Some examples of gibberellins include GA₃, commonly referred to as gibberellic acid; and GA₄ and GA₇, which are immediate precursors of GA₃. There are approximately 130 gibberellins described today, and these are encompassed by the general term "gibberellin".

In the formulations, either a single gibberellin or a combination of two or more gibberellins may be employed. The gibberellin(s) may be selected from the group consisting of gibberellin A₄ (GA₄), gibberellin A₃ (GA₃), gibberellin A₅ (GA₅), gibberellin A₇ (GA₇), gibberellin A₁₄ (GA₁₄), and mixtures thereof. Preferred gibberellins are (GA₄), gibberellin A₃ (GA₃), gibberellin A₇ (GA₇) or mixtures of these.

The amount of gibberellins depend on the specific compound, and will generally be between about 0.01 to about 5 wt%, preferably between about 0.03 wt% and about 2 wt%.

Suitable cytokinins are a class of plant regulation substances (phytohormones) that promote cell division, or cytokinesis, in plant roots and shoots. There are two types of cytokinins: adenine-type cytokinins represented by kinetin, zeatin, and 6-benzylaminopurine (also referred to as BAP, 6-BAP, or 6-benzyladenine), and phenylurea-type cytokinins like diphenylurea and thidiazuron (TDZ). In preferred embodiments the cytokinin is selected from the group consisting of kinetin (synthetic or derived from seaweed), 6-BAP, 1-(2-chloropyridin-4-yl)-3-phenylurea (CPPU), and TDZ.

The amount of cytokinins depend on the specific compound, and will generally be between about 0.01 to about 5 wt%, preferably between about 0.04 wt% and about 2 wt%.

The amount of indole-3-butyric acid depends on the specific compound, and will generally be between about 0.01 to about 5 wt%, preferably between about 0.05 wt% and about 2 wt%.

S-ABA may be used in an amount between about 0.01 to about 5 wt%.

Suitable auxins include natural or synthetic chemicals that behave like the naturally occurring auxins produced by plant enzyme systems, and the term "auxin" and "auxins" as used herein refers to such compounds in natural and synthetic form. Indoleacetic acids, indol-3-butyric acid (3-BA); naphthaleneacetamide; 2 methyl-1-naphthaleneacetic acid and 2-methyl-1-naphthylacetamide have hormonal activity and may be substituted for the naturally occurring auxins. It may be useful to have metal ions present with the auxins, such as for example zinc or manganese. In preferred embodiments, the auxin employed is selected from the group consisting of 3-indolebutyric acid, 3-indoleacetic acid, 1-naphthylacetic acid, 3-indolebutyric acid, and salts and esters thereof. Preferably, the metal ions required for a good activity are supplied together with the auxin.

A preferred composition comprises about 0.08 - 0.1 wt% kinetin, 0.03 - 0.06 wt% gibberellic acid (GA3), and 0.04 - 0.06 wt% indolebutyric acid (IBA). The cytokinin is a natural plant growth regulator that promotes cell division and leaf expansion while slowing leaf aging. Gibberellic acids are naturally occurring plant growth regulators that stimulate cell division and elongation in leaves and stems. Indolebutyric acid is a plant growth regulator that stimulates vigorous root formation and development, and increases cell elongation.

The concentrate comprising micronutrients and the PGRs used in this formulation preferably is used in furrow while seeds are planted.

In an alternative embodiment, which may be combined with the use of one or more PGRs, additional amino acids are used. Preferred amino acids are glycine betaine and/or proline. Glycine-betaine and/or proline preferably are used in amounts between about 0.5 wt% - 12 wt%, preferably between 1 wt% and 10 wt%. The amount may be preferred to be about 8 wt% or less.

The concentrate may be diluted before it is applied as foliar spray or in furrow, close to the seed.

A suitable dilution is the dilution in which the concentrate will be used in practice. For testing purposes, it may be adequate to use for example a 1:50 dilution or higher dilution like 1:100.

The self- dissolving property of the liquid concentrate can be tested by adding a suitable amount of concentrate in water. For example, one could add 1 wt% of concentrate to water, and invert the vessel with the mixture a few times (i.e., turning the vessel upside down). Generally, a stable solution should have been formed when 2 times turning the vessel upside down, or less.

The concentrate according the invention may comprise further components, such as for example at least one of a fungicide, a biocide, a plant strengthening agent or the like.

The concentrate according to the present invention may further comprise a fungicide. Preferably, one or more of the following fungicides is used: Specific anti powdery mildew fungicides such asmorfolines like fenpropidine and fenpropimorf, metrafenone, cyflufenamide, quinoxyfen and proquinazid; SBI fungicides like triazoles like epoxyconazol, prothioconazole, metconazole, tebuconazole etc; Strobilurines (Qol fungicides) like azoxystrobin, coumoxystrobin, dimoxystrobin, enoxastrobin, famoxadone, fenamidone, fenaminostrobin, fluoxastrobin, flufenoxystrobin, kresoxim-methyl, metominostrobin, orysastrobin, pyraoxystrobin picoxystrobin, pyraclostrobin, pyrametastrobin, pyribencarb, triclopyricarb trifloxystrobin and SDHI like fungicides like benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane and thifluzamid.

Suitable further compounds that can be added are jasmonates or phoshonic acid, which strengthen the defence mechanisms of the plants. Suitable jasmonates include methyl jasmonate, propyldihydrojasmoante and jasmonic acid. Further suitable compounds comprise acibenzolar-s-methyl.

The concentrate according the invention may further include a biocide, like a bactericide and/or algicide, like for example isothiazolin-3 derivatives, like benzyl-isothiazolin, n-octyl isothiazolinone, chloro-methyl and methyl isothiazolinone; bromo-nitro-propane-diol; ethylenedioxydimethanol; (3-(3,4-dichlorophenyl)-1,1-dimethylurea; iodo-propynyl butyl carbamate; N-trichloromethylthiophtalimide; Zinc Pyrithione; dichlorophen, streptomycin, or sorbate.

The concentrate according the invention may further include commonly applied additives. The amount of additive will generally not exceed 20% by weight or 10% by weight, based on the total weight of the composition. Frequently, such additives are present in amounts ranging from 0.01 to 20%, by weight, in particular from 0.1 to 10% by weight, based on the total weight of the composition.

Suitable additives include
- surfactants, such as dispersants, wetting agents and emulsifiers;
- defoamers (anti-foams);
- dyes or pigments;

The surfactants may be non-ionic, anionic, cationic or amphoteric, but preferably are non-ionic. Suitable surfactants that may be contained in the liquid formulations of the invention are disclosed, e.g. in "McCutcheon's Detergents and Emulsifiers Annual", MC Publishing Corp., Ridgewood, NJ, USA 1981; H. Stache, "Tensid-Taschenbuch", 2nd ed., C. Hanser, Munich, Vienna, 1981; M. and J. Ash, "Encyclopedia of Surfactants", vol. 1-111, Chemical Publishing Co., New York, NY, USA 1980-1981. In a water dilutable composition - if present - the amount of surfactant will generally be from 0.1 to 10% by weight, in particular from 0.2 to 5% by weight, based on the total weight of the composition.

Suitable non-ionic surfactants include:
alkoxylated alkanols, in particular ethoxylated fatty alcohols and ethoxylated oxoalcohols, such as ethoxylated lauryl alcohol, ethoxylated isotridecanol, ethoxylated cetyl alcohol, ethoxylated stearyl alcohol, and esters there-of, such as acetates
alkoxylated alkylphenols, such as ethoxylated nonylphenyl, ethoxylated dodecylphenyl, ethoxylated isotridecyl-phenol and the esters thereof, e.g. the acetates
alkylglucosides and alkyl polyglucosides,
copolymers, in particular block-copolymers of ethyleneoxide and propyleneoxide,
ethoxylated alkylglucosides and alkyl polyglucosides,
ethoxylated fatty amines,
ethoxylated fatty acids,
partial esters, such as mono-, di- and triesters of fatty acids with glycerine or sorbitan, such as glycerine monostearate, sorbitanmonooleate, sorbitantristearate
ethoxylated partial esters of fatty acids with glycerine or sorbitan, such as ethoxylated glycerine monostearate ethoxylates of vegetable oils or animal fats, such as corn oil ethoxylate, castor oil ethoxylate, tallow oil ethoxylate, ethoxylates of fatty amines, fatty amides or of fatty acid diethanolamides.

Suitable anionic surfactants include alkylsulfonates, such as lauryl sulfonate or isotridecylsulfonate; alkylsulfates, in particular fatty alcohol sulfates, such as lauryl sulfate, isotridecylsulfate, cetylsulfate, stearyl-sulfate; aryl- and alkylarylsulfonates, such as naphthylsulfonate, dibutylnaphthylsulfonate, dodecyldiphenylether sulfonate, cumylsulfonate, nonylbenzenesulfonate, dodecylbenzene sulfonate; sulfonates of fatty acids and fatty acid esters; sulfates of fatty acids and fatty acid esters; sulfates of alkoxylated alkanols, such as sulfates of ethoxylated lauryl alcohol; sulfates of alkoxylated alkylphenols; alkylphosphates, C8-C16 alkylphosphates; dialkylphosphates, C8-C16 dialkylphosphates; dialkylesters of sulfosuccinic acid, such as dioctylsulfosuccinate, acylsarcosinates, fatty acids, such as stearates, acylglutamates, and ligninsulfonates, generally in the form of alkalimetal salts, earth alkaline metal salts or ammonium salts, in particular in the form of sodium, potassium calcium or ammonium salts. Suitable cationic surfactants include quaternary ammonium compounds, in particular alkyltrimethylammonium salts and dialkyldimethylammonium salts, e.g. the halides, sulfates and alkylsulfates; pyridinium salts, in particular alkylpyridinium salts e.g. the halides, sulfates and C1 - C4-alkylsulfates and imidazolinium salts in particular N,N'-dialkylimidazolinium salts, e.g. the halides, sulfates or methoxulfates.

As regards the surfactants, the term "alkyl" as used herein and if not defined otherwise is a linear or branched alkyl group having from 4 to 30, preferably from 6 to 22 carbon atoms, e.g. n-hexyl, 1-methylpentyl, n-heptyl, n-octyl, 2-ethylhexyl, n-nonyl, n-decyl, 1-methylnonyl, 2-propylheptyl, n-dodecyl, 1-methyldodecyl, n-tridecyl, n-tetradecyl, n-pentadecyl, n-hexadecyl, n-heptadecyl, n-octadecyl, n-nonadecyl, n-eicosyl, and the like. The terms "alkoxylated" and "alkoxylates" means that OH-functions have been reacted with an alkyleneoxide, in particular a C2-C4-alkylene oxide, preferably ethyleneoxide or a mixture of ethyleneoxide or propyleneoxide to form an oligoalkyleneoxide group. Likewise the term "ethoxylated" means that OH-functions have been reacted with ethyleneoxide to form an oligoethyleneoxide group. The degree of alkoxylation (or ethoxylation) refers to number average of alkyleneoxide (ethyleneoxide) repeating units and will usually be in the range from 1 to 50, frequently from 1 to 30 and in particular from 2 to 20. The amount of surfactant will preferably not exceed 5% by weight, based on the total weight of the pesticide composition and may vary from 0.001 to 5% by weight, in particular from 0.01 to 3% by weight, based on the total weight of the composition.

Suitable defoamers include polysiloxanes, such as polydimethyl siloxane and waxes. The amount of defoamer will be generally not exceed 1 % by weight, based on the total weight of the composition. E.g. in the water dilutable compositions, the defoamer may be present in amounts ranging from 0.001 to 1 % by weight, in particular from 0.001 to 0.8% by weight

Suitable pigments or dyes include pigment blue 15:4, pigment blue 15:3, pigment blue 15:2, pigment blue 15: 1, pigment blue 80, pigment yellow 1, pigment yellow 13, pigment red 112, pigment red 48:2, pigment red 48: 1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. The amount of dyes and/or pigments will be generally not exceed 1 % by weight, based on the total weight of the composition except for water, and the dye or pigment may be present in amounts ranging from 0.001 to 1 % by weight, in particular from 0.01 to 0.5% by weight.

The concentrate as described above is suitable to be diluted to obtain a water based spraying liquid for foliar spray on plants or for in furrow application with seeds.

The concentrate can be used as such for treating seeds.

A water based spraying liquid comprises water and a suitable amount of concentrate. Further, other additives, actives etc. may be present, which can be separately mixed with the water.

As explained above, the concentrate may comprise additional active compounds like further growth regulators, fungicides, insecticides, acaricides and the like. However, it may also be effective to add additional active compounds and/or additives to the water based spraying liquid. For example, such additional active compound may be stable and soluble in water and are preferably delivered to the farmer as concentrated solution in water. The concentrate according the invention allows a great freedom to operate for a farmer. Hence, additives or additional active components, to be used in combination with the micronutrients, and preferably one or more PGRs can be added to the concentrate, but can also be added directly to the water phase.

Suitable additional active compounds include further growth regulators, fungicides, phosphonic acid and jasmonates.

The additional plant growth regulators are as described above.

Suitable additional compounds include specific anti powdery mildew fungicides such as described above.

Suitable further compounds that can be added are jasmonates or phoshonic acid, which strengthen the defence mechanisms of the plants. Suitable jasmonates include methyl jasmonate, propyldihydrojasmoante and jasmonic acid.

Still, further metal compounds may be added to the water based solution, although it is preferred to have these micronutrients in the concentrates.

Still further, amino acids may be added, optionally as salts.

The present invention also relates to a method for treating plants with at least micronutrients, and preferably an at least one growth regulator, wherein the above described water based spraying liquid is sprayed on plants in an amount such that the effective amount of concentrate is about 50 mL or more, preferably about 100 mL or more up to about 5 L or less of said concentrate per hectare.

Preferred amounts to achieve an effective amount of concentrate are between about 0.1 L to about 1 L, and more preferably about 0.2-0.5 L for one hectare.

The spray solution made by dilution of the concentrate will generally be sprayed at a volume of about 20 L/ha to about 2500 L/ha, preferably about 30 L/ha to about 500 L/ha.

A suitable dilution comprises about 99 wt% water or more and about 1 or 0.1 wt% of said concentrate or less. Preferably, the concentrate is diluted with water in a range of about 1:100 to 1:1000 (in volume/volume). Suitable amounts of concentrate in water include 1 wt%, 0.5 wt%, 0,1 wt%, 0,05 wt% or the like. Generally, for foliar spray higher dilutions are used than with in furrow application.

The water based spraying liquid preferably comprises the concentrate in an amount of about 30 mL up to about 2 L of said concentrate per hectare for foliar spray, or between 50 mL to 5 L per hectare for in furrow application.

The method according the invention is preferably applied to field crops, vegetable crop or fruit crops. Field crops comprise broad acre crops which include tuber or root crops, cereal crops, oil crops and other crops. Suitable tuber or root crops include potatoes or sugar beet. Suitable cereal crops include maize or corn, rice, wheat, barley, rye, sorghum, flax, oat and grain. Suitable oil crops include soy bean, sunflower, rape-seed (canola) or peanut. Other crops include clover, alfalfa, cotton, mustard or tobacco

Suitable vegetable crops include asparagus, beans broccoli, Brussels sprouts, cabbage, cantaloupe, carrots, celery, cauliflower, sweet corn, cucumbers, eggplant, lettuce, melons, okra, onions, parsley, peas, peppers, potatoes, radishes, spinach, squash, tomatoes, turnips, water melon and the like.

Suitable fruit crops include small fruits, vines and tree fruits, like apples, bananas, grapes, olives, citrus (oranges, lemon, lime, grapefruit), pineapples, pomegranates, strawberries, papayas, stone fruit (apricot, cherry, nectarine, peach), and the like.

Further, the composition according the invention can suitably be applied on young trees, ornamental flowering plants (like roses, azaleas and the like) and on sod and turf.

### EXAMPLES

### Examples 1-9

The following mixtures were prepared from anhydrous copper-EDTA and the solvents described below. In order to test solubility, first the mixtures were gently shaken by hand for 5-15 min, kept in a mechanical shaker for one hour, or thereafter (if needed) were heated till 40 °C and stirred for 18 hr.

Results are given in Table 1. Next to the solvents given in the table, mixtures were provided with 1,3-butanediol, 1,4-butanediol, iso-propylalcohol, acetone, DMSO, 2-aminopropanol and ethyl-lactate. None of these solvents were able to provide a clear solution with 1 wt% Cu.EDTA.

**Table 1**

| Example | Amount of Cu-EDTA | Solvent | Remarks |
|---|---|---|---|
| 1 | 1 wt% | 1,2-ethanediol | Dissolved within 5 min |
| 2 | 1 wt% | Poly ethylene glycol 200 | Dissolved after 18 hr heating at 40 °C |
| 3 | 1 wt% | Glycerol | Dissolved after 1 hr shaking |
| 4 | 1 wt% | 1,2-propanediol | Dissolved after 1 hr shaking |
| 5 | 1 wt% | 1,2-butanediol | Dissolved after 40 min warming at 40 °C |
| 6 | 3 wt% | 1,2-ethanediol | Dissolved within 15 min |
| 7 | 3 wt% | Poly ethylene glycol 200 | Dissolved after heating, and keeping the solution for another 2 weeks at room temperature |
| 8 | 3 wt% | Glycerol | Dissolved after 1 hr shaking |
| 9 | 3 wt% | 1,2-propanediol | Dissolved after 1 hr shaking |

Furthermore, the clear solutions were kept at -5 °C for 18 hr, both without and with seeding. The solutions remained clear, and the seed crystals even dissolved.

Examples 1-9, also in view of the comparison experiments, show that copper ions can be stably dissolved in a glycol

### Examples 10-16

In the same way as described for examples 1-9, further mixtures were tested for providing a stable solution. Each time 1,2-propanediol was used as solvent. EDTA is ethylene-diamine tetra-acetic acid; DTPA is diethylenetriaminepentaacetic acid. Results are given in Table 2.

**Table 2**

| Example | Compound | Amount | Remarks |
|---|---|---|---|
| 10 | Fe.Na.EDTA salt | 1 wt% | Transparent yellow solution after 18 hr at 40 °C |
| 11 | Fe DTPA | 1 wt% | Transparent brownish solution after 18 hr at 40 °C |
| 12 | Fe.K.EDTA | 1 wt% | Transparent yellow solution after 18 hr at 40 °C |
| 13 | Zn acrylate | 1 wt% | Colorless solution after 18 hr at 40 °C |
| 14 | Zn EDTA | 1 wt% | Colorless solution after 18 hr at 40 °C |
| 15 | Mg EDTA | 1 wt% | Colorless solution after 18 hr at 40 °C |
| 16 | Mg EDTA | 3 wt% | Colorless solution after 18 hr at 40 °C |

The solutions were stable at -5 °C for 18 hr. The Zn and Mg solutions were also tested with seed crystals at -5 °C for 18 hr; the seed crystals dissolved, and no sign of crystallization was observed.

### Examples 17-22

In this set of examples, low amounts of water were present with the metal ion compounds. In all examples, solutions in propyleneglycol were prepared, with a solid content as given of salts of Fe³⁺. All formulations were clear and stable solutions within 5-10 min stirring, and remained stable upon storage at 5°C, also after seeding.

| Example | Amount of compound | Compound | Amount of water |
|---|---|---|---|
| 17 | 1 wt% | Fe EDTA (NH₄)₂(OH⁻) 7.7% | 0.85 wt% |
| 18 | 1 wt% | Fe DTPA(NH₄)₂ 6.0% | 0.89 wt% |
| 19 | 1 wt% | Fe EDTA.Na(H₂O)₃ 6% | 1.17 wt% |
| 20 | 3 wt% | FeEDTA (NH₄)₂(OH⁻) 7.7% | 2.56 wt% |
| 21 | 3 wt% | Fe DTPA(NH₄)2 6.0% | 2.66 wt% |
| 22 | 3 wt% | Fe EDTA.Na(H₂O)₃ 6% | 3.52 wt% |

### Example 23

First, 3 wt% solution of copper EDTA salt in propyleneglycol was prepared. Thereafter, L-proline was added. L-Proline dissolved quickly in amounts from 1.6 wt% to 6.6 wt%. The solutions were stable at -5 °C for 18 hr. The solutions were also tested with seed crystals at -5 °C for 18 hr; the seed crystals dissolved, and no sign of crystallization was observed.

### Example 24

First, 3 wt% solution of copper EDTA salt in propyleneglycol was prepared. Thereafter, glycine betaine was added. Glycine betaine dissolved after one hr mechanical shaking, or overnight in amounts from 1.6 wt% to 6.6 wt%. The solutions were stable at -5 °C for 18 hr. The solutions were also tested with seed crystals at -5 °C for 18 hr; the seed crystals dissolved, and no sign of crystallization was observed.

### Example 25-26

Mixtures were prepared based on propyleneglycol and three metal.EDTA compounds. First, copper.EDTA (0.5 resp. 1 wt%) was dissolved in the glycol. Thereafter 1 wt% resp. 2 wt% manganese.EDTA (50 °C, 2 days with stirring), and thereafter 2 resp. 4 wt% of zinc.EDTA (1 hr at 50 °C) were added and dissolved. The solutions were stable at -5 °C for 18 hr. The solutions were also tested with seed crystals at -5 °C for 18 hr; the seed crystals dissolved, and no sign of crystallization was observed.

### Example 27

A solution was prepared in a way analogous to example 19-20, with the metal ion EDTA complexes as given in Table 3. Thereafter, BHT and citric acid were dissolved, followed by Kinetin, IBA and GA3.

**Table 3**

| **Ingredient** | **% w/w** |
|---|---|
| Propylene glycol | 90.12 |
| Anhydrous Mn EDTA (13% Mn) | 3.04 |
| Anhydrous Cu EDTA (15% Cu) | 1.32 |
| Anhydrous Zn EDTA (15% Zn) | 5.30 |
| Citric acid | 0.10 |
| Kinetin | 0.09 |
| IBA (Indole-3-butyric acid) | 0.05 |
| GA3 | 0.05 |
| BHT | 0.10 |

The concentrate exhibited a good stability, while the PGRs were present in relatively small amounts.

The product of example 27 was used as fertilizer in furrow spray with onion seeds while these were sowed. Excellent growth was observed.

The invention has been described by reference to certain embodiments discussed above. It will be recognized that these embodiments are susceptible to various modifications and alternative forms well known to those of skill in the art without departing from the scope of the invention. Accordingly, although specific embodiments have been described, these are examples only and are not limiting upon the scope of the invention, which is defined in the accompanying claims.

## Claims

1. A liquid, substantially anhydrous concentrate comprising at least 0.1 wt% of metal ions, 0.3 wt% carboxylic acid compound which is soluble in glycol, and at least 40 wt% of a glycol compound.

2. The concentrate according to claim 1, wherein the metal ion is chosen from zinc, manganese, selenium, iron, copper, molybdenum, and magnesium and mixtures of these, preferably zinc, manganese and copper and mixtures of these.

3. The concentrate according to any one of the preceding claims, wherein the amount of metal ions is between 0.3-5 wt%, preferably 0.4-3 wt%.

4. The concentrate according to any one of the preceding claims, wherein the carboxylic acid compound is chosen from EDTA, DTPA, an amino acid, citric acid, lactic acid or mixtures thereof.

5. The concentrate according to any one of the preceding claims, wherein the concentrate comprises glycine, glycine-betaine and/or L-proline, preferably in an amount between 0.5-12 wt%.

6. The concentrate according to any one of the preceding claims, wherein the amount of carboxylic acid groups of the carboxylic acid compound is between 0.5 - 20 mole per mole of metal ion.

7. The concentrate according to any one of the preceding claims, wherein the glycol compound is a compound comprising a α,ω-ethyldiolgroup, optionally comprising ethyl-ether groups, and having a molecular weight of about 300 or lower, preferably about 150 or lower, like for example ethylene glycol, 1,2-propyleneglycol, 1,2-butylene glycol, glycerol, 1,4-diethyletherdiol, polyethyleneglycol with an Mw of about 300 or lower or mixtures thereof, and preferably comprises propyleneglycol.

8. The concentrate according to any one of the preceding claims, wherein the amount of water is less than 10 wt%, preferably less than 2%.

9. The concentrate according to any one of the preceding claims, wherein the concentrate further comprises an anti-oxidant, such as for example vitamin-E, butylated hydroxyanisole, 2,6-di-tert.butyl-p-cresol, tert-butylhydroquinone, propyl gallate or butylhydroxytoluene.

10. The concentrate according to any one of the preceding claims, wherein the concentrate comprises one or more plant growth regulators, chosen from a gibberellin, cytokinin, indole-3-butyric acid, chlormequat, ethephon, S-abscisic acid, triazoles with growth regulation activity like metconazole and tebuconazole and the like or an auxin.

11. The concentrate according to claim 10, wherein the concentrate comprises as plant growth regulators at least gibberellic-acid (GA3), kinetin and indole-3-butyric acid.

12. Water based spraying liquid suitable for foliar spray or for in furrow application, wherein the liquid comprises water and the concentrate according to any one of the preceding claims, wherein the water based spraying liquid comprises the concentrate in an amount of about 30 mL up to about 2 L of said concentrate per hectare for foliar spray, and between 50 mL to 5 L per hectare for in furrow application.

13. Method for treating plants with at least micronutrients and at least one growth regulator, wherein a water based spraying liquid according to claim 12 is sprayed on plants as foliar spray or is applied in furrow in an amount of about 20 L to about 2500 L per hectare.

14. Method according to claim 13, wherein the plants are vegetable crops, field (or broad acre) crop, or fruit crop.

15. Use of the concentrate according to any one of claims 1-11, wherein about 30 g to 2 kg of concentrate is applied on about 100 kg seeds.
